# EUROPEAN PATENT SPECIFICATION

(11) **EP 1 046 276 B1**
(45) Date of publication and mention of the grant of the patent: **25.07.2007**
(21) Application number: 99948620.2
(22) Date of filing: 21.10.1999
(51) Int. Cl.: H04N 1/32, G06K 17/00

(54) **SYSTEM FOR IDENTIFYING AND AUTHENTICATING LABELS**
SYSTEM ZUR IDENTIFIZIERUNG UND AUTHENTIZIERUNG VON ETIKETTEN
SYSTÈME D'IDENTIFICATION ET D'AUTHENTIFICATION DES ÉTIQUETTES

(30) Priority: 21.10.1998 BG 10286298
(43) Date of publication of application: 25.10.2000
(73) Proprietor: Jelev, Jivko Georgiev, 1712 Sofia (BG)
(72) Inventor: Jelev, Jivko Georgiev, 1712 Sofia (BG)
(74) Representative: RACKETTE Partnerschaft Patentanwälte
(86) International application number: PCT/BG1999/000020
(87) International publication number: WO 2000/024187

(56) References cited:
- EP-A- 0 554 613
- WO-A-98/20672
- WO-A-98/43197
- US-A- 5 790 536
- DITTMANN ET AL.: "Interactive Watermarking Environments" CONFERENCE PROCEEDINGS, IEEE CONFERENCE ON MULTIMEDIA COMPUTING AND SYSTEMS, AUSTIN, TEXAS, USA, 28/6-1/7/1998, pages 286-294, XP010291548

## Description

The invention concerns a system according to the preamble of claim 1.

A device is known for recording and reading, which contains an input signal formatting block, connected on its side with executive mechanism, comprised by a feed back circuit, featuring with that the input signal formatting block consists in at least two stages of protection, each of which contains at least one random digits generator, each respectively connected with its own mark and carrier, but the output of each of the random digits generators is connected with the controlling computer, which on its part is connected with deviating laser system while the controlling computer is connected to a handling table, which a valuable document, with built-in protection carrier is set on, under which is situated the first automatic reader, connected with one of the inputs of slave comparator, forming a feed back circuit with the first automatic reader, while the other input of the slave comparator is connected with the combined output of the marks as the output of the slave comparator is connected with the controlling computer, and after handling table a deviating block for implanting is set, a distributing block is placed after it, containing second automatic reader and a block for final control, while second automatic reader is connected hierarchically, consequently with one of the inputs for registration of the rejected banknotes and the other output is connected respectively to the outputs of the carriers, while the final Control block is connected with each of the three inputs of the blocks for registration of the rejected banknotes and the outputs of this blocks are connected respectively, separately with the final recording blocks on each level of protection over the multimedia carriers, pertaining standard protections from permission disquiets and hardware chips.

Another devices are known for distant control of authenticity of products, but they can not read multi-staged encrypted marks and can not give estimation for authenticity upon one or several codes.

A system according to the preamble of claim 1 is known from WO-A-98/43197.

The problem underlying the invention is to devise a unit for telecommunicational control of a single or multi-stage coded marks-excise labels over products, for protection and control of their authenticity. This problem is solved by a system according to claim 1.

The system comprises a high-resolution device, which receives image of a single or multi-stage multimedia-coded mark-excise label, processes it and, after coded inquiry, sends it through telecommunicational network to information centres of product manufacturers and or organisations, which have devised the relevant coded marks, contained in the visible one.

The manufacturer or any other organisation, engraved a coded mark and having in disposal codes for single level ciphers, de-codes accordingly their own coded mark, compares it with the data base for collation of the visible mark with that of decoded for the corresponding level.

If decoded mark coincides with the previously recorded one in the data base, the manufacturer or the organisation, carried out the control, using the reverse communication way, pass-over-to-the device that the product has been protected by original mark or the opposite, i.e., the display reads out that the product is not original, i.e., it is forged. The verifications are independent of each other for every stage of code.

The device features with, that it provides for the de-ciphering codes to remain in stock of the manufacturers or the organisations, devised the corresponding ciphered marks, as well as the data base for compliance of the visible over against any other ciphered mark.

The invention is expired by the attached figures, as follows:

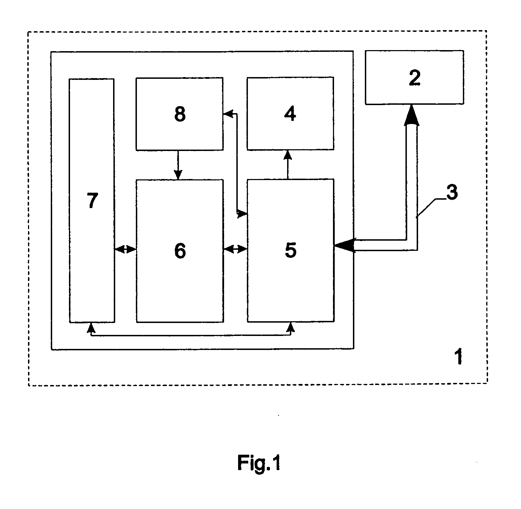

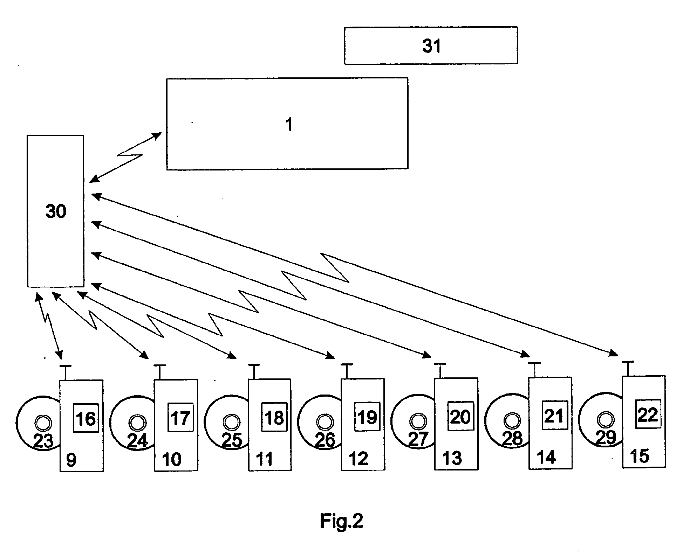

Fig. No.1 - Block-scheme of the device
Fig. No:2 -Block-scheme of the telecommunication control in terms of 7-stage ciphered mark.

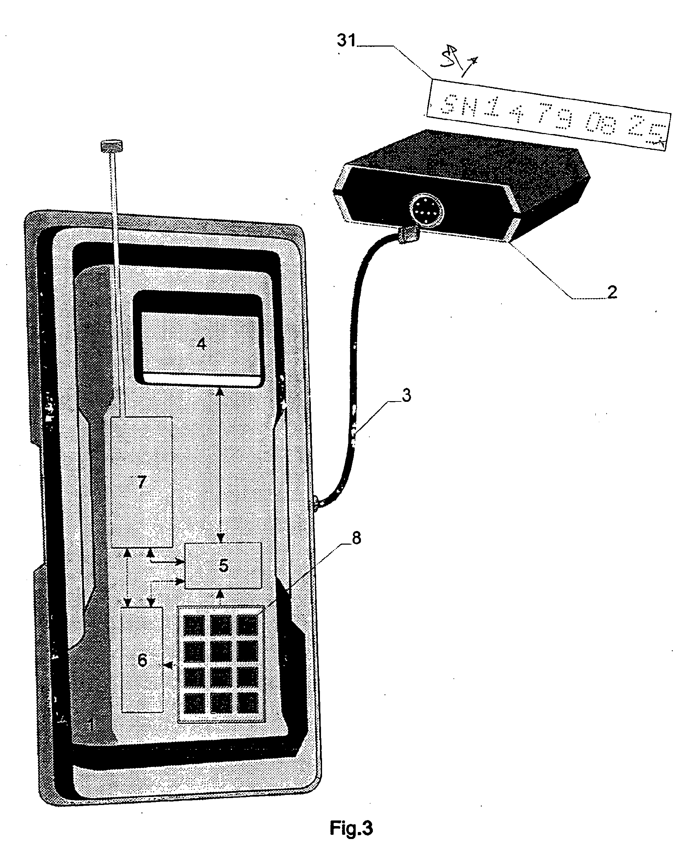

Fig. No.3 - Pattern-view of the device.

The device for telecommunicational control of single or multi-stage multimedia coded marks-excise labels over products for protection of their authenticity is characterised by reading device /2/, reading out the mark-excise label /31/ and connected by cable /3/ to device /1/ through processor /5/, which is connected through coding block /6/ functional buttons /8/ and high frequency transponder /7/ to network /30/, which is connected with transponders /9-15/, including decoding processors /16-22/ for comparison of the coincidence of visible mark with ciphered for any level recorded on multimedia carriers /23-29/. The reverse way connection is carried out by the processors /16-22/ in the transponders /9-15/ to the network /30/ and by the receiver /7/ to the coding block /6/ and the processor /5/, connected with the display /4/.

In front of the ciphered mark /31/ is placed the charge-coupled device - reading unit /2/ which receives the image of the mark and through the flexible cable /3/ sends it to device /1/ of the mastering processor /5/ and coding block /6/. Through the functional buttons /8/ and transponder /7/ the signal is transmitted by telecommunicational path to the product-manufacturer, protected by /31/ or to an organisation owning one or several of the ciphered marks, unless the owner has been authorised to receive responses from them.

The signals, received by transponders /9-15/ through network /30/ are decoded by processors /16-22/ in which have been correspondingly introduced codes for de-ciphering of the respective level and are compered by the data bases /23-29/ for coincidence of the deciphered mark with the readable yet by bare eye visible mark, containing ciphers. If the processors /16-22/ read out coincidence in the data base /23-29/ of previously recorded individually upon level correspondence of the visible mark against ciphered one, then, in reverse way, through the transmitters /9-15/, the network /30/ and the receiver of the unit /7/ an information for the authenticity of the product is appeared on the display.

In case of non-compliance of coded with visible mark for the respective cipher according to the above described way, an information for forgery will appear on the display /4/.

When the owner of the unit /1/ is apprised for and authorised, can apply for in the same way through buttons /8/ to organisations, pertaining the other levels of ciphers, recorded in /31/.

## Claims

1. A system comprising
- a telecommunication device (1) having a reading unit (2) and a transponder device (7) for communicating over a transmission line of a network (30);
- at least one database processor (16-22) connectable to a respective database (23 - 29) storing product identification data;
**characterized in that**
- the reading unit (2) is adapted to read a high resolution image of a product label (31) containing visible identification data and hidden authentication data;
- the telecommunication device (1) is adapted to transmit said high resolution image to at least one of said database processors (16-22);
- each database processor (16-22) is adapted to extract the hidden data from said high resolution image and to compare said hidden data with data stored in the respective database (23-29) to generate authenticity information for said identification data.

2. A system according to claim 1
**characterized in that** each database processor (16-22) sends said authenticity information to said telecommunication device (1).

3. A system according to claim 1 or 2
**characterized in that** the database is composed of at last one multimedia carrier (23-29).

4. A system according to any of the preceding claims
**characterized in that** the telecommunication device (1) is provided with functional buttoms (2).

5. A system according to any of the claims 2 to 4 **characterized in that** the telecommunication device is provided with a display (4) allowing to show said authenticity information.

6. A system according to any of the preceeding claims **characterized in that** the hidden authentication data is supplied by one or more independent manufactures or organisations.

## Patentansprüche

1. System bestehend aus
- einem Telekommunikationsgerät (1) mit einer Leseeinheit (2) und einer Transpondereinrichtung (7) für die Kommunikation über eine Übertragungsleitung eines Netzwerkes (30);
- wenigstens einem Datenbankprozessor (16-22), der mit einer Datenbank (23-29) verbindbar ist, die Produktidentifikationsdaten speichert;
**dadurch gekennzeichnet, dass**
- die Leseeinheit (2) geeignet ist, ein hochauflösendes Bild eines Produktetikettes (31) zu lesen, welches sichtbare Identifikationsdaten sowie versteckte Echtheitsdaten enthält;
- das Telekommunikationsgerät (1) geeignet ist, das hochauflösende Bild zu wenigstens einem Datenbankprozessor (16-22) zu übertragen;
- jeder Datenbankprozessor (16-22) geeignet ist, die versteckten Daten aus dem hochaufgelösten Bild zu extrahieren und die versteckten Daten mit den Daten zu vergleichen, die in den jeweiligen Datenbanken (23-29) gespeichert sind, um die Echtheitsinformationen für die Identifikationsdaten zu erzeugen.

2. System nach Anspruch 1, **dadurch gekennzeichnet, dass** jeder Datenbankprozessor (16-22) die Echtheitsinformationen zu dem Telekommunikationsgerät (1) sendet.

3. System nach Anspruch 1 oder 2, **dadurch gekennzeichnet, dass** die Datenbank wenigstens einen Multimediadatenträger (23-29) aufweist.

4. System nach einem der vorstehenden Ansprüche, **dadurch gekennzeichnet, dass** das Telekommunikationsgerät (1) mit Funktionstasten (8) ausgerüstet ist.

5. System nach einem der Ansprüche 2 bis 4, **dadurch gekennzeichnet, dass** das Telekommunikationsgerät mit einer Anzeige (4) versehen ist, die es gestattet, die Echtheitsinformationen darzustellen.

6. System nach einem der vorstehenden Ansprüche, **dadurch gekennzeichnet, dass** die versteckten Echtheitsdaten durch einen oder mehrere unabhängige Hersteller oder Organisationen bereitgestellt werden.

## Revendications

1. Système comprenant :
- un dispositif de télécommunication (1) disposant d'une unité de lecture (2) et d'un transpondeur (7) pour communiquer via une ligne de transmission d'un réseau (30);
- au moins un processeur de base de données (16-22) connectable à une base de données respective (23-29) mémorisant des données d'identification de produit;
**caractérisé en ce que**
- l'unité de lecture (2) est adaptée pour lire une image à haute résolution d'une étiquette de produit (31) contenant des données d'identification visibles et des données d'authentification cachées;
- le dispositif de télécommunication (1) est adapté pour transmettre ladite image à haute résolution à au moins l'un desdits processeurs de base de données (16-22);
- chaque processeur de base de données (16-22) est adapté pour extraire les données cachées de ladite image à haute résolution et pour comparer lesdites données cachées à des données mémorisées dans la base de données respective (23-29) pour générer des données d'authentification pour lesdites données d'identification.

2. Système selon la revendication 1, **caractérisé en ce que** chaque processeur de base de données (16-22) envoie lesdites informations d'authentification audit dispositif de télécommunication (1).

3. Système selon la revendication 1 ou 2, **caractérisé en ce que** la base de données est composée d'au moins un support multimédia (23-29).

4. Système selon l'une quelconque des revendications précédentes, **caractérisé en ce que** le dispositif de télécommunication (1) est pourvu de boutons de fonctions (8).

5. Système selon l'une quelconque des revendications 2 à 4, **caractérisé en ce que** le dispositif de télécommunication est pourvu d'un affichage (4) permettant de montrer lesdites données d'authentification.

6. Système selon l'une quelconque des revendications précédentes, **caractérisé en ce que** les données d'authentification masquées sont fournies par un ou plusieurs fabricants ou organismes.
